(19) Europäisches Patentamt
European Patent Office
Office européen des brevets

(11) **EP 4 516 963 A1**

(12) **EUROPEAN PATENT APPLICATION**

(43) Date of publication:
**05.03.2025 Bulletin 2025/10**

(21) Application number: **23194238.4**

(22) Date of filing: **30.08.2023**

(51) International Patent Classification (IPC):
**C25B 1/04** $^{(2021.01)}$          **C25B 11/089** $^{(2021.01)}$
**H01M 4/90** $^{(2006.01)}$

(52) Cooperative Patent Classification (CPC):
**C25B 1/04; C25B 11/089;** H01M 4/9041;
H01M 4/921

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Max-Planck-Gesellschaft zur Förderung der Wissenschaften e.V.**
**80539 München (DE)**

(72) Inventors:
• **WANG, Xia**
**01069 Dresden (DE)**
• **FELSER, Claudia**
**55268 Nieder-Olm (DE)**
• **SHEKHAR, Chandra**
**01309 Dresden (DE)**

(74) Representative: **Schweitzer, Klaus et al Plate Schweitzer Zounek Patentanwälte Rheingaustrasse 196 65203 Wiesbaden (DE)**

(54) **METHOD FOR IDENTIFYING CHIRAL OXYGEN ELECTROCATALYSTS FOR WATER ELECTROLYZERS AND FUEL CELLS**

(57)    The present invention is directed to a method for identifying catalysts for the oxygen evolution reaction (OER) and oxygen reduction reaction (ORR), as well as fuel cells, which method comprises selecting a topological chiral compound from chiral Space Group $P6_3$, or $P2_13$, and further selecting out of these compounds the ones which contain at least a heavy metal for high spin polarization, and sort these selected compounds with increasing spin-orbit-coupling (SOC), which results in a number of compounds which are sorted with increasing catalytic activity.

Figure 1

## Description

## Background

Chirality - or "handedness" - is a geometric property of some molecular systems and is of great importance for the design of new drugs and many other key biological molecules. A molecule is chiral if it cannot superpose its mirror image. It has recently been found that some inorganic three-dimensional crystals are also characterized with handedness in the absence of operations such as inversion, mirror or other roto-inversion symmetries. These compounds exhibit chirality-dependent physical properties such as surface adsorption, spin hall effect, and optical response.

Crystal systems can be classified into 230 space groups according to the distinctive features of space symmetry. According to the spatial symmetry, 65 out of the 230 space groups can form chiral crystal structures, out of which 22 are enantiomorphic space groups and the remaining 43 space groups are non-enantiomorphic space groups. For enantiomorphic chiral structures, two enantiomorphs can crystallize in a pair of space groups, e.g. $P6_1$ and $P6_5$ which represent the two opposite chiralities. Along the screw axis, the atoms will arrange clockwise and anticlockwise along the axis according to the screw index. For non-enantiomorphic space groups, compounds with opposite chiral structure are not distinguishable by their space group because they are described by the same special symmetry, e.g. $P6_3$, and $P2_13$. Well-known examples of chiral structures are cubic structures of the space group (SG) 198, $P2_13$ such as FeSi, CoSi, and AlPt. This family of compounds exhibits a variety of properties such as superconductivity, long-range magnetic order, and magnetic skyrmions. They are of great fundamental interest as well as promising candidates for electronic devices, surface reactions, and spintronics applications. Recently, experiments confirmed that electron transport through a chiral system depends on the electron spin orientation.

Water electrolyzers and fuel cells have recently received great attention because they are believed to be one of the best strategies of storing and transporting renewable energy. Water electrolyzers are devices that use electric current to split water molecules into hydrogen and oxygen gases through hydrogen evolution reaction (HER) and oxygen evolution reaction (OER). Fuel cells are electrochemical cells that convert the chemical energy of a fuel (often hydrogen) and an oxidizing agent (often oxygen) into electricity. In this process, hydrogen atoms are oxidized and react with oxygen atoms to form water through the hydrogen oxidation reaction (HOR) and oxygen reduction reaction (ORR). Both technologies involve an oxygen electrocatalysis process (i.e. OER and ORR) that convert between oxygen molecules with triplet state $\left(^3\Sigma_g^-\right)$ and water molecules/reaction products with singlet state ($^1\Delta$). The spin-dependent multi-electron transfer process of oxygen electrocatalysis is the main reason for the sluggish kinetics of the reactions, which in turn significantly limits the performance of water electrolyzers and fuel cells. Therefore, all these reactions require the use of efficient catalysts to lower the reaction energy barriers and speeding the reaction kinetics. Up to today, achiral noble metals such as Pt and Ir are the only choice for commercial applications. The development of chiral catalysts with spin polarization to facilitate the electron transfer process is an ongoing challenge.

## Prior Art

EP2197819B1 discloses a catalyst for selective hydrogenation of unsaturated hydrocarbon compounds. The catalyst comprises a binary palladium gallium intermetallic compound, as well as the corresponding mixture of elements.

EP2060323A1 discloses the use of the optionally supported ordered intermetallic palladium gallium compounds as catalysts. These catalysts can be used for the selective hydrogenation of an alkyne, such as ethyne, to produce the corresponding alkene.

WO1993012879A1 provides a catalyst for the dehydrogenation of light paraffin. The catalyst comprises 0.3 to 5 wt.% Ga and 0.1 to 5 wt.% Pt on a spinel-type support material. The catalyst is called PtGa but is a mixture of Pt and Ga elements, rather than the compound PtGa with a defined crystal structure.

J. Prinz, et al. J Phys. Chem. C, 2014, 118, 12260 and J. Prinz, et al. J. Am. Chem. Soc. 2014, 136 reported that the crystal surface of the chiral compound PdGa influences the molecular adsorption and selectivity. The theoretical calculations confirm that some reactions such as the hydrogenation of acetylene ($C_2H_2$) to ethylene ($C_2H_4$), have different reaction rates on different chiral surfaces. The authors only show the conversion of $C_2H_2$ to ethylene $C_2H_4$, electrochemical catalysis is not disclosed.

Niels B.M. Schröter, et al, arXiv:1907.08723 [cond-mat.mes-hall] observed the topological surface states in chiral crystalline PdGa. They proposed that enantioselective catalytic reactions of chiral molecules may be caused by the large surface electronic density of states of the Fermiarcs in the chiral crystals. The authors only experimentally confirmed the existence of ultra-long Fermi arcs, electrocatalysis is not mentioned.

Niels B.M. Schroter, et al, Nat. Phys. 2019, 15, 759 reported that AlPt is a structurally chiral topological semimetal with multifold band crossings and long Fermi arcs surface states.

Takane, D. et al. Phys. Rev. Lett. 2019, 122, 076402 observed the same phenomena in the chiral crystal CoSi.

Both of these papers confirmed the topology character of the chiral crystals and the existence of long Fermi arc. There is no disclosure of a potential application as catalysts for electrochemical reactions.

U. A. Paulus et al. J. Phys. Chem. B 2002, 106, 4181; Alfred B. Anderson et al J. Phys. Chem. B 2005, 109, 1198 reported that Pt-based alloys such as PtNi, $Pt_3Ni$, PtCo, $Pt_3Co$ are good catalysts for fuel cells. However, these alloys are solid solutions, rather than ordered phases (or intermetallic compounds); i.e. they do not exhibit a defined crystal structure and have no chirality.

EP3828972A1 discloses to the use of chiral compounds which crystallize in Space Group 198 ($P2_13$) and which have the formula AB (I) or ABC (II), such as CoSi, PdGa, PtAl, PtGa, PtMg, RhSi and RuAl as catalysts for electrochemical reactions, specifically for HER and OER and for fuel cells.

## Object of the Invention

While in the past certain individual compounds have been found, which improve catalysis of the hydrogen evolution reaction (HER), the specific catalytic performance of OER and ORR have been neglegted. This may be due to the fact that the spin-dependent catalytic mechanisms or physical principles, which dominate these oxygen reactions are still unclear. Only by understanding these mechanisms would it be possible to predict and design chiral compounds with spin polarisation behavior, which are customized for these oxygen reactions. It was, therefore, an object of the present invention to provide a method for identifying intrinsic chiral catalysts with high spin polarization for the OER and ORR.

## Summary of the Invention

The present invention provides a solution to the above object and is directed to a method for identifying intrinsic chiral catalysts for the OER and ORR, which method comprises selecting a topological chiral compound from chiral Space Group $P6_3$, of $P2_13$, which are compounds having the formula AB (I) or ABC (II), wherein

in formula (1)

A    is selected from a transition metal of IUPAC group 7, 8, 9, 10, and 11; and

B    is selected from an element of IUPAC group 2, 13, 14, or 15, and

in formula (II)

A    is selected from a transition metal of IUPAC group 7, 8, 9, 10 or 11; and

B    is selected from an element of IUPAC group 1, 2 or 3; and

C    is selected from an element of IUPAC group 13, 14, 15, or 16,

and further selecting out of these compounds the ones which contain at least a heavy metal selected from Fe, Co, Ni, Ru, Rh, Pd, Ir, Pt and Bi for high spin polarization, and sort these selected compounds with increasing spin-orbit-coupling (SOC), which results in a number of compounds which are sorted with increasing catalytic activity.

## Brief Description of the Drawings

**Figure 1:**
Illustrations of the intrinsic chiral crystal structures for a PdGa, b RhSi, c RhSn and d RhBiS, respectively. The handedness can be distinguished considering the helix formed by Pd or Rh active site along (111) direction. The light blue, gray, silver, orange, blue, red, and yellow sphere represent the Pd, Ga, Rh, Si, Sn, Bi, and S atom, respectively.

**Figure 2:**
Single-crystal XRD diffraction patterns of **a** PdGa, **b** RhSi, **c** RhSn and **d** RhBiS recorded along the (100) direction, respectively.

**Figure 3:**

**a** LSV polarization curves of $RuO_2$, $RhTe_2$, RhSi, RhSn and RhBiS, respectively. The current density is normalized with the geometric area of the electrode.

**b** $\Delta$ E10 (red column) and $\Delta$ E100 (blue column) calculated for $RuO_2$, $RhTe_2$, RhSi, RhSn and RhBiS, respectively. The lines are visual guide for the corresponding OER activity trend for $RuO_2$, $RhTe_2$, RhSi, RhSn and RhBiS, respectively.

**c** Reported state-of-the-art electrocatalysts for OER.

**d** Halfwave potential ($E_{1/2}$) and kinetic current density (Jk) of TH PdGa, Pt/C and AC PdGa at 0.85 V vs. RHE.

**Figure 4:**

**a** Tafel plots and corresponding slopes for $RuO_2$, $RhTe_2$, RhSi, RhSn and RhBiS, respectively.

**b** UV-visible spectrophotometry analysis of $H_2O_2$ production from chronoamperometry at 0.5 V vs. RHE on TH PdGa, Pt/C and HC PdGa.

**Detailed Description of the Invention**

It is generally believed that the OER/ORR proceed on the surface of electrocatalysts through several possible oxygen intermediates, such as OH*, O*, and OOH* associated with four sequential proton-coupled electron transfers process. The Sabatier principle, which states the adsorption binding energy between the catalytic active sites and the reactive intermediates should be neither too strong nor too weak, has been widely used as the key criterion in designing and screening electrocatalytic materials for the oxygen electrocatalysis in the past. Consequently, a volcano plot is constructed to indicate the activities of various electrocatalysts as a function of their binding energy, in which the volcano peak position represents the best catalyst with optimal bonding strength. Further research investigation extracted different electronic structure indicators, such as $e_g$ orbital filling and d band position, etc., to establish structure-catalytic performance relationships, predict the performance of new catalysts, and thus accelerating the rational design of catalysts by bypassing time-consuming trials. Although significant progress has been made through conventional electronic structure engineering strategies (doping, strain and vacancy, etc.), the spin state of the electron transferred in the OER/ORR process has been seldomly concerned.

The OER involves the transition of the spin states from the singlet $OH^-$ or $H_2O$ with all paired electrons to the triplet state $O_2$ ($^3\Sigma_g^-$), where two electrons with parallel alignment occupy the frontier $\pi$* orbitals and ORR is the reverse process. Such a spin transition needs to be proceeded by an additional energy such as enough voltage, which results in the sluggish reaction kinetics and low energy efficiency. Therefore, directly spin polarization of the catalytic active site may favor the parallel spin alignment of oxygen atoms during the OER/ORR, effectively facilitating the kinetics and efficiency of the reaction.

Unlike traditional intermetallic alloys such as PtNi, $Pt_3Ni$, PtCo or $Pt_3Co$ investigated by U. A. Paulus et al. or Alfred B. Anderson et al, the method according to the present invention uses compounds, which have well-defined crystal structures and composition and are chiral. As a crystal they can be used directly as an electrode and catalyst for OER and ORR; in powder form, they can e.g. be deposited onto a conductive electrode.

The present invention provides a method for identifying catalysts for the OER and ORR, which method comprises selecting a topological chiral compound from Space Group $P6_3$, or $P2_13$, which are compounds having the formula AB (I) or ABC (II).

In formula (I)

A    is selected from a transition metal of IUPAC group 7, 8, 9, 10 or 11; and

B    is selected from an element of IUPAC group 2, 13, 14 or 15.

Preferably,

A    is selected from Fe, Co, Mn, Pt, Pd, Ru, Rh, Ir or Au, and

B    is preferably selected from Mg, Al, Ga, Si, and Ge.

More preferably, the chiral crystals with the formula AB crystallizing in Space Group 198 ($P2_13$) are selected from the group consisting of CoSi, PdGa, PtAl, PtGa, PtMg, RhSi, RhSn and RuAl.

In formula (II)

A    is selected from a transition metal of IUPAC group 7, 8, 9, 10 or 11; and

B    is selected from an element of IUPAC group 1, 2 or 3; and

C    is selected from an element of IUPAC group 13, 14, 15, or 16.

In a preferred embodiment

A    is selected from Fe, Co, Ni, Mn, Pt, Pd, Ru, Rh, Ir or Au, and

B    is selected from Ba, Ca, Sr, Bi, Sb, P or As, and

C    is selected from S, Se, Te, Si, Ge or Sn.

More preferably the chiral crystals with the formula of ABC crystallizing in Space Group 198 (P2$_1$3) are selected from the group consisting of RhBiS, RhBiSe, RhSbS, RhSbSe, RhPSe, IrBiS, IrBiSe, IrSbSe, IrPSe, IrSbS, NiSbSe, NiPS, PdBiSe, PdSbS, PdSbSe, PdSbTe, PtBiSe, PtSbS, and PtSbSe.

The compounds (I) and (II) crystallize in Space Group 198 (P2$_1$3). The Space Groups are defined and listed in the "International Tables for Crystallography" (Hahn, Th. (2002), Hahn, Theo (ed.), International Tables for Crystallography, Volume A: Space Group Symmetry, International Tables for Crystallography, A (5th ed.), Berlin, New York: Springer-Verlag, doi: 10.1 107/97809553602060000100, ISBN 978-0-7923-6590-7).

All compounds are topological homochiral compounds.

The systematic deviation of the overpotentials for the different samples in various electrolytes implies that chirality can be used to improve the activity of OER. More importantly, it is noted that the OER activity among all the homochiral catalysts keep up with the same trends as the SOC strength. Therefore, the inner relationship among SOC, spin polarization and catalytic performance is important.

The electrons injected to the chiral catalysts are spin-polarized due to the CISS effect (CISS=Chiral induced spin selectivity), which further generates spin-polarized oxygen intermediates at the active sites. The spin angular momentum is conserved during the electron transfer from the chiral catalysts to the reactant (i.e.OH⁻) (alkaline media). The sequence of spin-polarized electron transfers from the hydroxide anion into the chiral electrode leads necessarily to high spin multiplicity oxygen intermediates at the active sites, with subsequent generation of triplet oxygen ($^3\Sigma_g^-$). On the contrary, no spin selectivity for the electron injection to the achiral catalysts leads to mixed spin intermediates, and thus a spin flip is required to form the final triplet oxygen.

The method according to the present invention starts with selection of topological chiral compounds from space group P6$_3$ or P2$_1$3, preferably P2i3 (No. 198) , which are compounds with the formula AB (I) or ABC (II). This has been described in detail above. It has now been found, that out of these topological chiral compounds the OER/ORR catalytic activity increases with increasing spin polarization. Spin polarization is the degree to which the spin, that is, the intrinsic angular momentum of elementary particles, is aligned with a given direction. The spin polarization is quantified as the asymmetry between the up and down spins transmitted through the crystal, expressed in the following Equation:

$$\mathcal{P} = \frac{T_{\uparrow\uparrow} + T_{\downarrow\uparrow} - T_{\uparrow\downarrow} - T_{\downarrow\downarrow}}{T_{\uparrow\uparrow} + T_{\uparrow\downarrow} + T_{\downarrow\uparrow} + T_{\downarrow\downarrow}} \times 100$$

For the preselected compounds this means, that the compounds with the highest spin polarization have to be identified. The present inventors found, that the SOC has an impact on spin polarization. SOC describes the interaction between the electron's spin and its orbital motion around the nucleus. The SOC increases with the atomic number Z of the atom as $Z^4$ in the case of a hydrogen-like atom. The higher the SOC, the higher the spin polarization in the bulk inorganic chiral materials. As a consequence, a higher spin polarization is generated from heavy elements within the pre-selected compounds.

Accordingly, in a next step, from the preselected compounds, those compounds, which contain at least one heavy, i.e. SOC-effective element such as Fe, Co, Ni, Ru, Rh, Pd, Ir, Pt or Bi, preferably Ru, Rh, Pd, Ir, Pt or Bi are selected. This screening process results in a collection of compounds with high spin polarization. A sorting of the compounds resulting from the above screening process with increasing spin polarization (SOC) results in a sorted list of electrolyzer/fuel cell catalysts, wherein the compound with the highest spin polarization shows the highest electrolyzer/fuel cell catalytic activity.

It is important to provide this list rather than just identifying the best catalyst, because a catalyst is not only selected according to its catalytic activity but also according to other application specific properties, such as chemical resistivity, temperature stability, noble metal/rare element content (i.e. price), toxicity, environmental aspect, etc.

The compounds preselected as described above are sorted with increasing SOC as follows: RhSi< RhSn<RhBiS. The atomic masses of the elements in the compound are added by increase the element mass in B or C position.

CoSi, PdGa, PtAl, PtGa, PtMg, RhSi, RhSn and RuAl.

CoSi< RuAl< PdGa< RhSi< RhSn< PtMg< PtAl< PtGa

RhBiS, RhBiSe, RhSbS, RhSbSe, RhPSe, IrBiS, IrBiSe, IrSbSe, IrPSe, IrSbS, NiSbSe, NiPS, PdBiSe, PdSbS, PdSbSe, PdSbTe, PtBiSe, PtSbS, and PtSbSe.

RhPSe< RhSbS< RhSbSe< RhBiS< RhBiSe;

IrPSe< IrSbS< IrBiS< IrBiSe;

NiPS< NiSbSe;

PdSbS< PdSbSe< PdSbTe< PdBiSe;

PtSbS< PtSbSe< PtBiSe

## Method of manufacture

Various techniques can be used to make the compounds AB and ABC. In one exemplary method, the crystalline chiral catalysts crystallizing in Space Group 198 (P2t3) according to the present invention are grown from its melt of elements using the self flux technique. In this method, first, a polycrystalline ingot is prepared using e.g. the arc melt technique with the stoichiometric mixture of high purity elements of A and B, or A, B and C. Then the obtained ingots are crushed to obtain a powder, which is then heated to a temperature between 1100-1600 °C and then cooled to room temperature at a rate of 1-5 °C /h. This reaction is preferably performed in a sealed tube, e.g. a quartz tube, preferably under reduced pressure of between $10^{-4}$ to $10^{-5}$ Pa.

## General properties of the catalysts

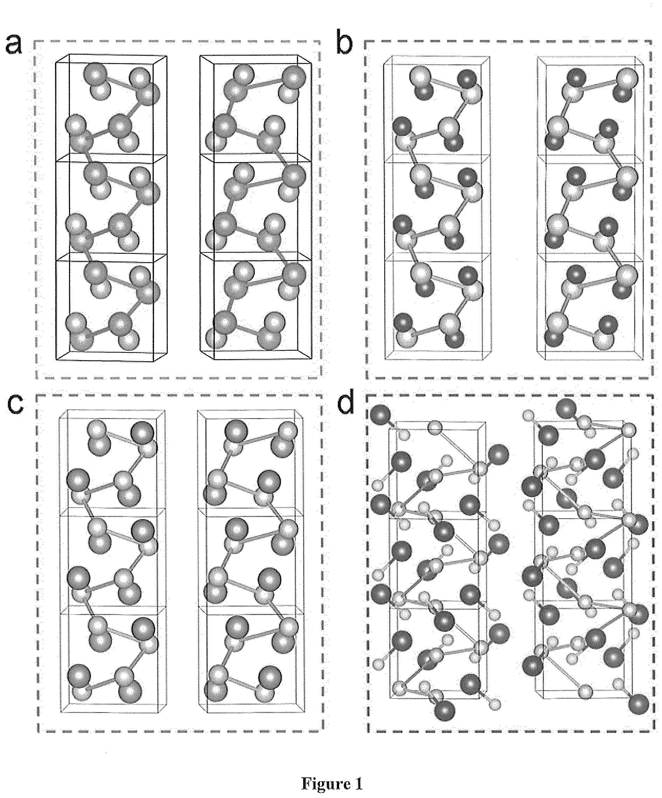

RhSi, RhSn and RhBiS all belong to the family of B20 topological chiral group with simple cubic Bravais lattice in non-symmorphic space group P213 (no. 198). As demonstrated in Fig. 1b-c, the crystal chirality can be illustrated by the Rh atoms along the crystal c-axis, which rotates either in right- or left-handed manner, depending on the enantiomer. The crystal structural chirality directly determines the electron polarization at the active sites and the other electronic properties. Due to similarities in lattice geometry and chemical elements, RhSi, RhSn and RhBiS possess comparable band structures but gradually increased SOC. Moreover, the Rh sites in all the materials can be regarded as the active sites for OER. As a result, topological chiral RhSi, RhSn and RhBiS single crystals endow a perfect platform to experimentally decouple various coexisting effects contributing to the OER, i.e., electronic properties and extrinsic modifications, to fundamentally explore the spin polarization mechanisms independently. The chiral compounds can be in the form of a single crystal and as such can directly be used as both electrodes and catalysts. Likewise, the chiral compounds can be provided as powders, which are then deposited on a conductive substrate such as Ni foam, carbon cloth, or they can be mixed with graphene to increase the mobility and conductivity.

## Examples

The invention is now explained in more detail with reference to examples.

For the synthesis of chiral crystals of PdGa and PtGa, the corresponding elements were mixed and ground together under an inert gas atmosphere. A polycrystalline ingot was prepared using arc melt technique. The ingot was then sealed in a quartz tube under reduced pressure of between $10^{-4}$ to $10^{-5}$ Pa. The entire quartz ampoule was first heated to 1100 °C, halted there for 12 h and then slowly cooled to 900 °C with a rate of 1.5 °C /h. Finally, the sample was cooled to 800 °C with a rate of 50 °C Zh, annealed for 120 h and then cooled to 500 °C with a rate of 5 °C /ii. Chiral crystals were then obtained by letting the sample cool down to room temperature.

High quality bulk single crystals of RhSi, RhSn and RhBiS were grown from the melt using the vertical Bridgman crystal growth technique. The crystal symmetry was confirmed by the single-crystal X-ray diffraction. RhSi, RhSn and RliBiS all display well-ordered and symmetric diffraction spots along [100] direction, which confirmed the good quality of the single crystals (Fig.ld-f). Based on the analysis above, perfect single crystals of RhSi, RhSn and RhBiS with cubic Bravais lattice in non-symmorphic space group $P2_13$ were synthesized.

**Electrocatalytic activity**

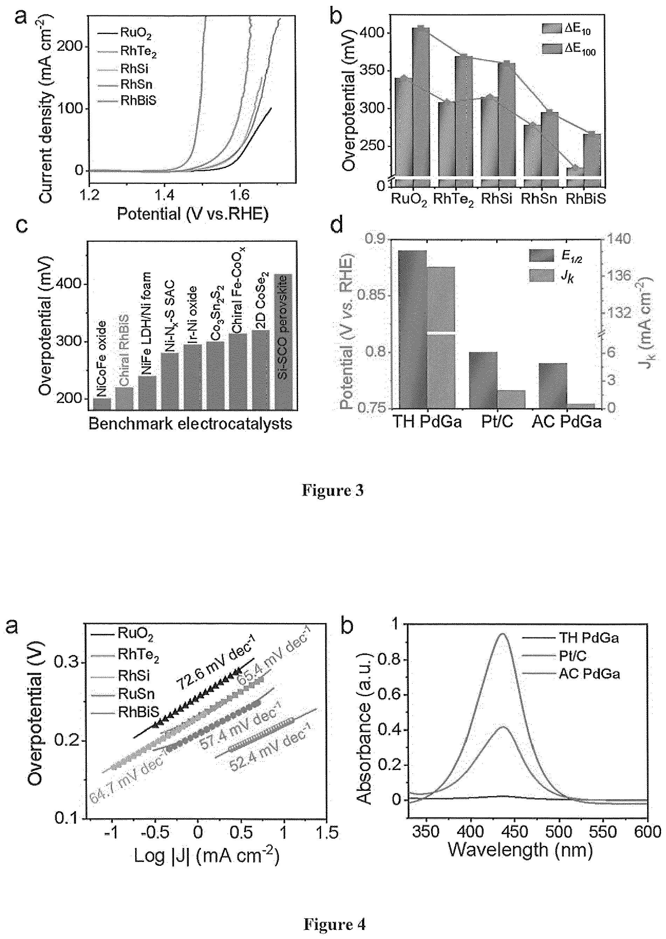

With the homochiral crystal structure, the OER activity of RhSi, RhSn and RhBiS were then examined in 1 M KOH solution by using the bulk single crystals as the electrocatalysts directly. The commercial $RuO_2$ and the topological achiral single crystal of $RhTe_2$ with cubic lattice in space group Pa-3 (no. 205) are used as the reference samples. Fig. 3a displays the iR-corrected linear sweep voltammograms (LSV) for all of the samples at a scan rate of 10 mV s$^{-1}$. Note, the current densities of $RhTe_2$, RhSi, RhSn and RhBiS in Fig. 3a were normalized to the geometric area of the single crystals. The RuOz suspension was drop-cast onto a glassy carbon working electrode and the surface area of the glassy carbon disk was used to normalize the current density of $RuO_2$. The overpotentials at 10 mA cm$^{-2}$ ($\Delta E_{10}$) were calculated to be 340 mV, 308 mV, 315 mV, 278 mV, and 221 mV for RuOz, $RhTe_2$, RhSi, RhSn and RhBiS, respectively (Fig. 3b). Significantly, the $\Delta E_{10}$ of the chiral RhBiS reached an extremely low overpotential of approximately 221 mV, which outperformed various nanostructured electrocatalysts with substantial surface area, i.e., $RuO_2$ (ca. 340 mV), the NiFe-LDH/Ni foam (ca. 240 mV) Ni-Nx-S single atom catalyst (SAC) (ca. 280 mV), precious metal based Ir-Ni oxide (ca. 295 mV), topological semimetal $Co_3Sn_2S_2$ (ca. 300 mV), chiral Fe-CoO$_x$ nanoparticles (ca. 314 mV), $CoSe_2$ transition metal dichalcogenides (TMD) nanosheets (ca. 320 mV), Si doped $SrCoO_{3-\delta}$ perovskite (ca. 417 mV) (Fig. 3c). The overpotential at 100 mA cm$^{-2}$ ($\Delta E_{100}$) was also calculated for all the samples to evaluate the activity of all the samples at high current density. Similar to the 4 $E_{10}$, the homochiral crystals exhibited higher activity than that of the achiral $RhTe_2$ crystal and the benchmark $RuO_2$ regarding to the $\Delta E_{100}$. Moreover, among all the homochiral samples, the overall activity follows the order of RhSi < RhSn < RhBiS. (Fig. 3b).

**Spin polarization for OER/ORR kinetics and selectivity**

The OER kinetics can be reflected as the slope in Tafel plots, in which the relationship between OER exchange current density and the overpotential is presented according to the equation:

$$\eta = -2.303RT/(\alpha F) \times \log i_0 + 2.303RT/(\alpha + n)F \times \log i \qquad (1)$$

where the slope equals to 2.303RT/[( a +n)F] (R is the universal gas constant, T is the temperature, n is the number of electron transferred before the rate-determining step (RDS), $\alpha$ is charge transfer coefficient and usually assumed to be 0.5, and F is the Faraday constant).

The lower of the Tafel slope, the faster reaction kinetics of the OER, and vice versa. For example, the Tafel slope is 120 mV/dec if the first step is the RDS because the electron transfer n is zero before the RDS. The Tafel slope is reduced to 40 mV/dec if the second step is the RDS with n equals 1. As a consequence, the value of the Tafel slope is often reputed as an indication of the OER mechanism. As shown in Fig. 4a, the $RuO_2$ and $RhTe_2$ demonstrate higher Tafel slope of 72.6 mV dec$^{-1}$ and 65.4 mV dec$^{-1}$, which implies a mixed RDS for the first electron transfer step and second steps. In contrast, the Tafel slope of chiral RhSi, RhSn and RhBiS is 64.7 mV dec$^{-1}$, 57.4 mV dec$^{-1}$ and 52.4 mV dec$^{-1}$, which implies that the second step gradually dominates the RDS, where the spin aligned Rh-OOH ($\uparrow\uparrow$) is formed at the active sites. It is worth notice that the Tafel slope of chiral RhBiS decreased to 52.4 mV dec$^{-1}$, which suggests that the RDS is approaching the second step in these chiral catalysts by increasing the SOC.

The selectivity of the ORR can effectively be evaluated by monitoring the production of $H_2O_2$, a key indicator that is expected to be reduced at chiral catalyst surfaces due to the CISS effect. To measure the $H_2O_2$ yield, UV-visible spectrophotometry was employed after a 1-hour chronoamperometry test (Fig. 4b). The results revealed a significant reduction in the $H_2O_2$ yield in the presence of the TH PdGa sample, as depicted in Fig. 4b. This decrease can be attributed to the fact that the formation of $H_2O_2$ (a singlet species) is spin-forbidden at a spin-polarized chiral surface. During the ORR process, the OH intermediates generated from $O_2$ will display different spin states based on the chirality of the catalysts surface. In particular, on an achiral catalyst surface, the unpaired electrons of OH intermediates display mix spin states. As a result, the OH intermediates in their doublet ground state can interact with each other, allowing for the formation of $H_2O_2$. However, with a homochiral catalyst surface, the unpaired electrons of the OH intermediates are aligned in a parallel fashion so that the formation of $H_2O_2$ is symmetry forbidden. This intriguing behavior highlights the role of the chiral-induced spin polarization in governing the selectivity of the ORR and sheds light on the unique catalytic properties of the TH PdGa sample.

## Materials characterization

A white beam backscattering Laue X-ray diffraction was performed to check the single crystallinity of RhSi, RhSn, RhBiS and PdGa at room temperature. The single crystal X-ray diffraction data were collected on a Rigaku AFC7 four-circle diffractometer with a Saturn 724+ CCD-detector applying graphite-monochromatized Mo-K $\alpha$ radiation. A FEI Tecnai G2 F30 electron microscope with an acceleration voltage of 300 kV was used to perform STEM. UV-Vis absorption spectra were tested on an Agilent Cary 5000 UV-Vis-NIR spectrophotometer with an integration sphere.

## Electrochemical measurements

The electrochemical measurements were carried out on a VMP3 electrochemical workstation using a standard three-electrode configuration. A Pt electrode, and an Hg/HgO electrode were used as the counter electrode and reference electrode, respectively. The bulk single crystals were used directly as the working electrode. For RuOz reference sample measurement, homogeneous catalysts ink (RuOz, Fuel cell) was drop-cast on the glassy carbon rotating disk electrode (RDE, 5 mm in diameter) with a loading of 0.25 mg cm$^{-2}$ for electrocatalysis. In detail, the OER polarization was conducted in the Ar-saturated 1 M KOH solution with a scan rate of 10 mV s$^{-1}$.

The Nernst equation was used as the conversion formula for converting potentials from the Ag/AgCl scale to the RHE scale:

$$\mathrm{E_{RHE} = E_{Hg/HgO} + 0.059 \times pH + 0.098} \qquad (2)$$

The ECSA of a catalyst sample is calculated from the double-layer capacitance according to equation:

$$\mathrm{ECSA = C_{dl}/C_s} \qquad (3)$$

where $C_s$ is the specific capacitance of the sample or the capacitance of an atomically smooth planar surface of the material per unit area under identical electrolyte conditions. Here the value of $C_s$ is 0.040 mF cm$^{-2}$.

The roughness factor (RF) is calculated by taking the estimated ECSA and dividing by the geometric area of the electrode. For RuO$_2$ sample, the geometric area of the RDE is used to calculate the RF.

The specific activity of all of the catalysts were determined using the equations:

specific activity = j/RF, where j, and RF refer to the current density at 200 mV overpotential, and roughness factor, respectively.

## H$_2$O$_2$ determination

The presence of H$_2$O$_2$ was confirmed in a colorimetric test titration experiment of the electrolyte after reaction, using o-tolidine as a redox indicator. For the colorimetric measurements, 0.8 mL of an o-tolidine solution prepared according to the Elmms-Hauser method were added to 4 mL of the used electrolyte and left to react for 1 hour. A yellow color was observed in the presence of H$_2$O$_2$ with an UV absorption peak at around 435 nm. To quantify the concentration of the H$_2$O$_2$, a calibration curve was determined using commercial H$_2$O$_2$.

## Claims

1.    Method for identifying intrinsic chiral catalysts for the OER and ORR, which method comprises selecting a topological chiral compound from chiral Space Group P6$_3$, or P2$_1$3, which are compounds having the formula AB (I) or ABC (II), wherein
in formula (I)

A is selected from a transition metal of IUPAC group 7, 8, 9, 10, and 11; and
B is selected from an element of IUPAC group 2, 13, 14, or 15, and

in formula (II)

A is selected from a transition metal of IUPAC group 7, 8, 9, 10 or 11; and
B is selected from an element of IUPAC group 1, 2 or 3; and
C is selected from an element of IUPAC group 13, 14, 15, or 16, and further selecting out of these compounds the ones which contain at least a heavy metal selected from Fe, Co, Ni, Ru, Rh, Pd, Ir, Pt and Bi for high spin polarization, and sort these selected compounds with increasing spin-orbit-coupling (SOC), which results in a number of compounds which are sorted with increasing catalytic activity.

2. Method according to claim 1, wherein in formula (I)

    A is selected from Fe, Co, Mn, Pt, Pd, Ru, Rh, Ir or Au, and
    B is preferably selected from Mg, Al, Ga, Si and Ge.

3. Method according to claim 1 or 2, wherein the chiral crystals with the formula AB crystallizing in Space Group 198 (P2$_1$3) are selected from the group consisting of CoSi, PdGa, PtAl, PtGa, PtMg, RhSi, RhSn and RuAl.

4. Method according to claim 1, 2 or 3, wherein in formula (II)

    A is selected from Fe, Co, Ni, Mn, Pt, Pd, Ru, Rh, Ir or Au, and
    B is selected from Ba, Ca, Sr, Bi, Sb, P or As, and
    C is selected from S, Se, Te, Si, Ge or Sn.

5. Method according to one of claims 1-4, wherein the chiral crystals with the formula of ABC crystallizing in Space Group 198 (P2i3) are selected from the group consisting of RhBiS, RhBiSe, RhSbS, RhSbSe, RhPSe, IrBiS, IrBiSe, IrSbSe, IrPSe, IrSbS, NiSbSe, NiPS, PdBiSe, PdSbS, PdSbSe, PdSbTe, PtBiSe, PtSbS, and PtSbSe.

6. Method according to one of claims 1-5, wherein the spin polarization is determined by the Equation:

$$\mathcal{P} = \frac{T_{\uparrow\uparrow} + T_{\downarrow\uparrow} - T_{\uparrow\downarrow} - T_{\downarrow\downarrow}}{T_{\uparrow\uparrow} + T_{\uparrow\downarrow} + T_{\downarrow\uparrow} + T_{\downarrow\downarrow}} \times 100$$

wherein

$\mathcal{P}$ = spin polarization in percent
$T_{\uparrow\uparrow}$ = amount of up-up spin of incoming and outcoming electrons
$T_{\downarrow\uparrow}$ = amount of down-up spin of incoming and outcoming electrons
$T_{\uparrow\downarrow}$ = amount of up-down spin of incoming and outcoming electrons, and
$T_{\downarrow\downarrow}$ = amount of down-down spin of incoming and outcoming electrons.

7. Method according to claim 3, wherein the compounds CoSi, PdGa, PtAl, PtGa, PtMg, RhSi, RhSn and RuAl are sorted with increasing catalytic activity as follows: CoSi< RuAl< PdGa< RhSi< RhSn< PtMg< PtAl< PtGa.

8. Method according to claim 5, wherein the compounds RhBiS, RhBiSe, RhSbS, RhSbSe, RhPSe, IrBiS, IrBiSe, IrSbSe, IrPSe, IrSbS, NiSbSe, NiPS, PdBiSe, PdSbS, PdSbSe, PdSbTe, PtBiSe, PtSbS, and PtSbSe are sorted with increasing catalytic activity as follows:

    RhPSe< RhSbS< RhSbSe< RhBiS< RhBiSe;
    IrPSe< IrSbS< IrBiS< IrBiSe;
    NiPS< NiSbSe;
    PdSbS< PdSbSe< PdSbTe< PdBiSe;
    PtSbS< PtSbSe< PtBiSe.

Figure 1

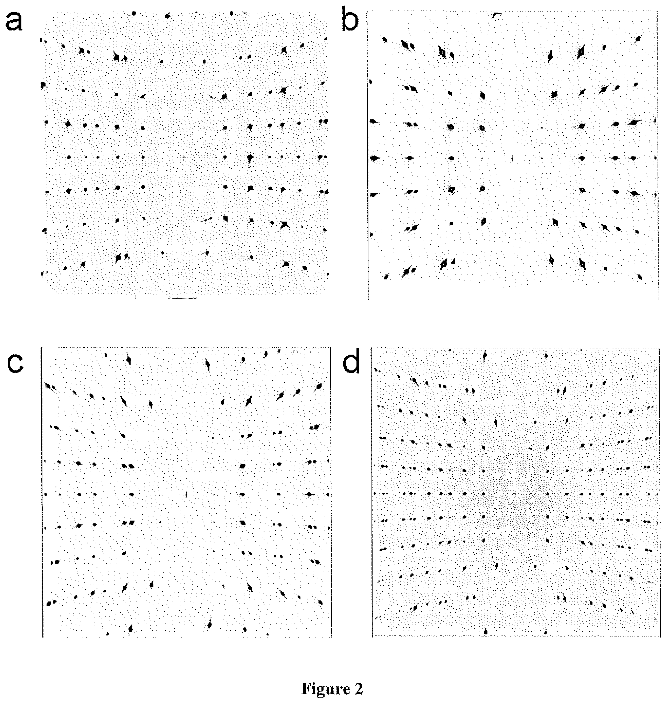

Figure 2

Figure 3

Figure 4

**Europäisches Patentamt**
**European Patent Office**
**Office européen des brevets**

# EUROPEAN SEARCH REPORT

Application Number

EP 23 19 4238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 3 828 972 A1 (MAX PLANCK GESELLSCHAFT [DE]) 2 June 2021 (2021-06-02) | 1-8 | INV. C25B1/04 |
| Y | * the whole document * | 1-8 | C25B11/089 H01M4/90 |
| Y | LI LING ET AL: "Spin-Polarization Strategy for Enhanced Acidic Oxygen Evolution Activity", ADVANCED MATERIALS, vol. 35, no. 35, 19 July 2023 (2023-07-19) , XP093126080, DE ISSN: 0935-9648, DOI: 10.1002/adma.202302966 * the whole document * | 1-8 | |

TECHNICAL FIELDS SEARCHED (IPC)

C25B
H01M

The present search report has been drawn up for all claims

| Place of search | Date of completion of the search | Examiner |
|---|---|---|
| Munich | 31 January 2024 | Ritter, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 4238**

This annex lists the patent family members relating to the patent documents cited in the above-mentioned European search report.
The members are as contained in the European Patent Office EDP file on
The European Patent Office is in no way liable for these particulars which are merely given for the purpose of information.

**31-01-2024**

| Patent document cited in search report | Publication date | Patent family member(s) | Publication date |
|---|---|---|---|
| EP 3828972 A1 | 02-06-2021 | NONE | |

**EP 4 516 963 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2197819 B1
- EP 2060323 A1
- WO 1993012879 A1
- EP 3828972 A1

### Non-patent literature cited in the description

- **J. PRINZ et al.** *J Phys. Chem. C*, 2014, vol. 118, 12260
- **J. PRINZ et al.** *J. Am. Chem. Soc.*, 2014, 136
- **NIELS B.M. SCHRÖTER et al.** *arXiv:1907.08723*
- **NIELS B.M. SCHROTER et al.** *Nat. Phys.*, 2019, vol. 15, 759
- **TAKANE, D. et al.** *Phys. Rev. Lett.*, 2019, vol. 122, 076402
- **U. A. PAULUS et al.** *J. Phys. Chem. B*, 2002, vol. 106, 4181
- **ALFRED B. ANDERSON et al.** *J. Phys. Chem. B*, 2005, vol. 109, 1198